# EUROPEAN PATENT SPECIFICATION

(11) **EP 3 654 493 B1**
(45) Date of publication and mention of the grant of the patent: **08.09.2021**
(21) Application number: 19209211.2
(22) Date of filing: 14.11.2019
(51) Int. Cl.: H02J 50/00, H02J 50/70

(54) **CONTACTLESS POWER TRANSFER SYSTEM HAVING TWO PARALLEL CONDUCTORS**
KONTAKTLOSES STROMÜBERTRAGUNGSSYSTEM MIT ZWEI PARALLELEN LEITERN
SYSTÈME DE TRANSFERT D'ÉNERGIE SANS CONTACT AVEC DEUX CONDUCTEURS PARALLÈLES

(30) Priority: 15.11.2018 JP 2018214713
(43) Date of publication of application: 20.05.2020
(73) Proprietor: Daihen Corporation, Osaka 532-8512 (JP)
(72) Inventor: Tanaka, Junichi, Osaka-shi, Osaka 532-8512 (JP); Tsukiyama, Daisuke, Osaka-shi, Osaka 532-8512 (JP); Idogaki, Takumi, Osaka-shi, Osaka 532-8512 (JP)
(74) Representative: Manitz Finsterwald Patent- und Rechtsanwaltspartnerschaft mbB

(56) References cited:
- WO-A1-93/23909
- WO-A1-2015/144619
- KR-B1- 100 919 499
- US-A1- 2009 160 262
- US-A1- 2014 354 067

## Description

The present invention relates to a two-parallel-line unit.

A contactless power supply system which supplies high-frequency power to two parallel lines on which two conductors are laid parallel to each other and magnetically couples a coil on a power reception side to the two parallel lines has been developed (refer to Patent Publication JP-A-2017-184561, for example).

KR 10-0919499 B1 discloses a two-parallel-line unit according to the preamble of claim 1. Further systems for transferring energy from a power supply are known from WO 93/23909 A1, WO 2015/144619 A1, US 2009/0160262 A1 and US 2014/0354067 A1.

In such a contactless power supply system, power reception efficiency decreases when a distance between the pair of conductors constituting the two parallel lines varies. Accordingly, an object of the present invention is to provide a two-parallel-line unit with high power reception efficiency, which is compact and easy to be carried.

As defined in the independent claim 1, a two-parallel-line unit according to one aspect of the present invention supplies power from a power supply device to a power reception side in a contactless manner. The two-parallel-line unit includes two parallel lines composed of a pair of foldable conductors, and a plurality of guide plates which fix a distance between the pair of the conductors. Each of the guide plates has a first face and a second face opposite to the first face and is formed in an approximately rectangular flat plate shape. A foldable bending part is provided between the guide plates neighboring each other, and the plurality of guide plates are stackable by being folded such that the first faces face each other and the second faces face each other.

According to this aspect, a flexible layout can be constructed because the two parallel lines are foldable. Even though the two parallel lines are foldable, the distance between the conductors is unlikely to vary because the guide plates are provided. It is possible to provide a two-parallel-line unit with high power reception efficiency. The two-parallel-line unit can be carried in compact form.

In the aforementioned aspect, a cavity which accommodates the two parallel lines may be formed in each of the guide plates.

According to this aspect, since a space in which the two parallel lines are accommodated can be secured in the cavity, the number of components can be reduced as compared to a case of securing a space by inserting a spacer between two guide plates.

In the aforementioned aspect, the two-parallel-line unit may further include an insulating cover which covers the bending part, and the first face of each of the guide plates may have a cover seat formed along the bending part.

According to this aspect, the width of the bending part is determined according to a difference between the widths of the insulating cover and the cover seat, and thus the width of the bending part can be controlled by the insulating cover.

In the aforementioned aspect, each of the conductors may be composed of a flat braided copper wire.

According to this aspect, the conductors of the two parallel lines can be configured using a flat braided copper wire which is inexpensive and easily available.

In the aforementioned aspect, the two-parallel-line unit may be combined with a capacitor unit which reduces impedance of the two-parallel-line unit.

According to this aspect, a power transmission device having the aforementioned excellent effects can be configured.

According to the present invention, a two-parallel-line unit with high power reception efficiency can be provided.
FIG. 1 is a schematic diagram showing an example of a contactless power supply system according to an embodiment of the present invention;
FIG. 2 is a circuit diagram showing an example of the contactless power supply system according to an embodiment of the present invention;
FIG. 3 is a perspective view showing an example of a power transmission device according to an embodiment of the present invention;
FIG. 4 is a plan view of the two-parallel-line unit of FIG. 3, in which part of the unit is illustrated in an exploded manner;
FIG. 5 is a perspective view showing a guide plate shown in FIG. 4;
FIG. 6 is a perspective view showing a modified example of the guide plate shown in FIG. 5; and
FIG. 7 is a diagram showing an example of a two-parallel-line unit folded into a bellows form.

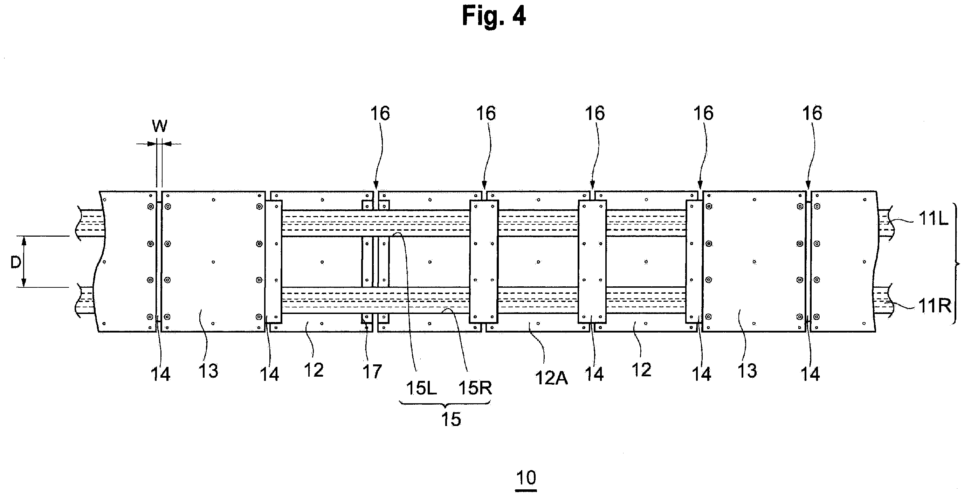

Preferred embodiments of the present invention will be described with reference to the attached drawings. Note that the same reference numbers will be used to refer to the same or similar parts in the drawings. A two-parallel-line unit 10 according to an embodiment of the present invention is partly characterized by including two parallel lines 11 which are foldable, and a plurality of guide plates 12 attached to the two parallel lines 11 (refer to FIG. 4).

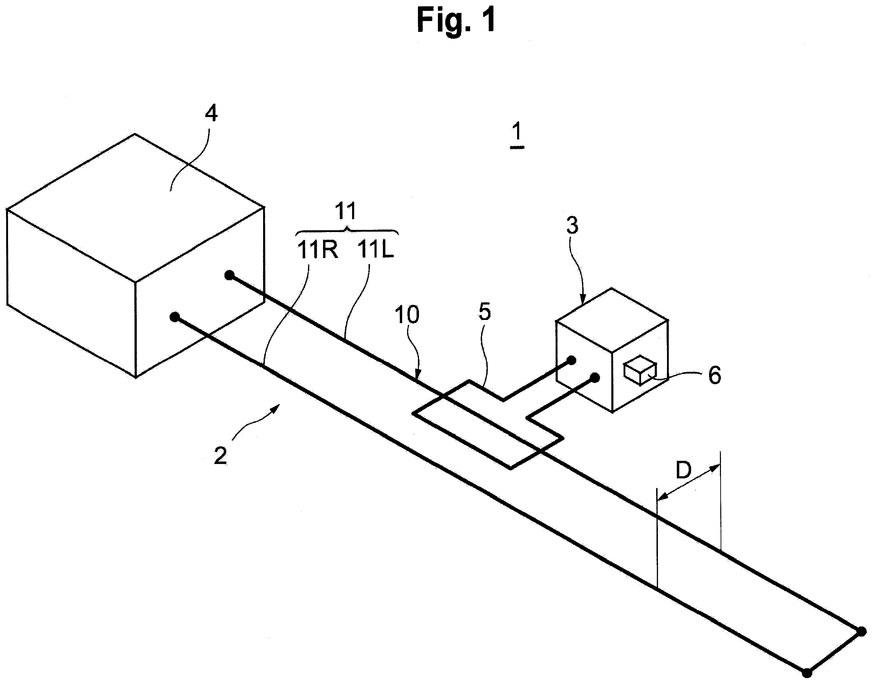

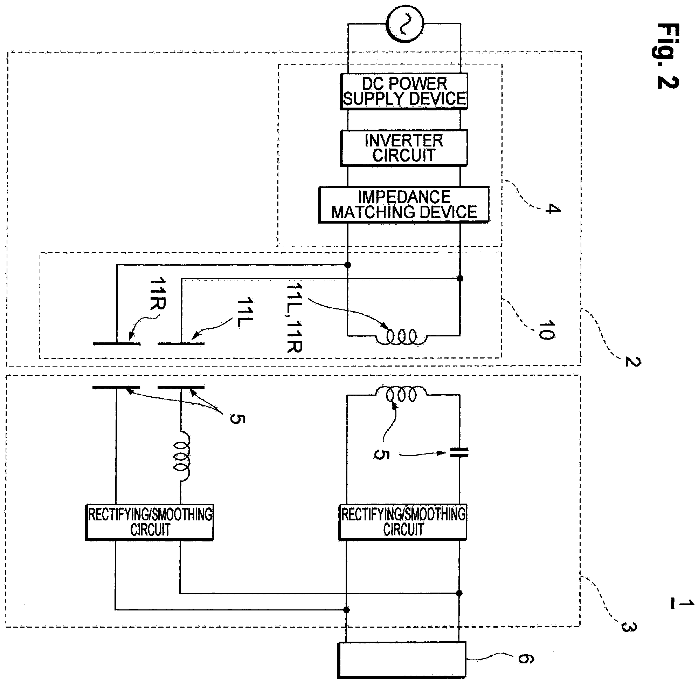

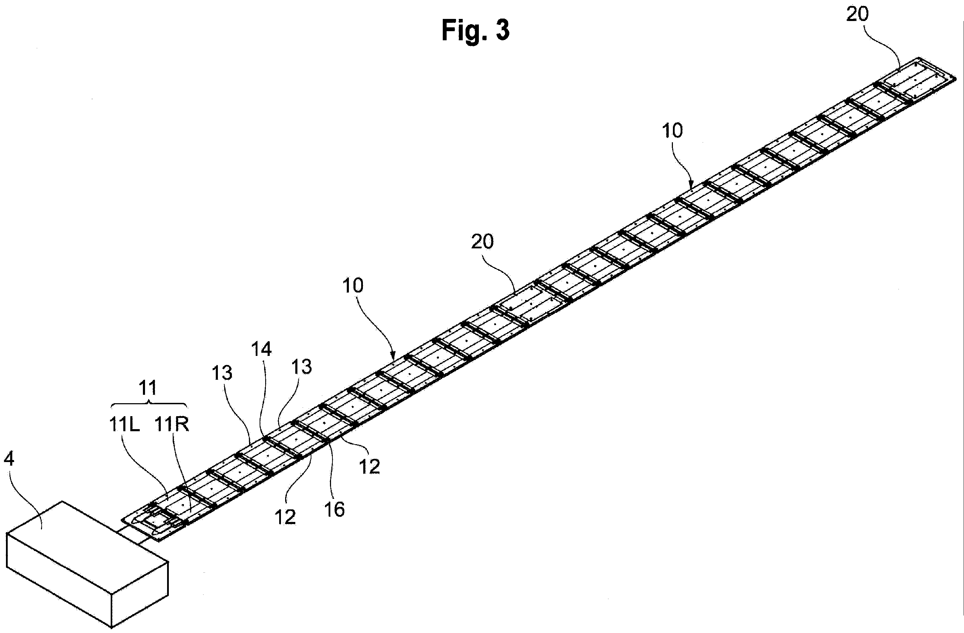

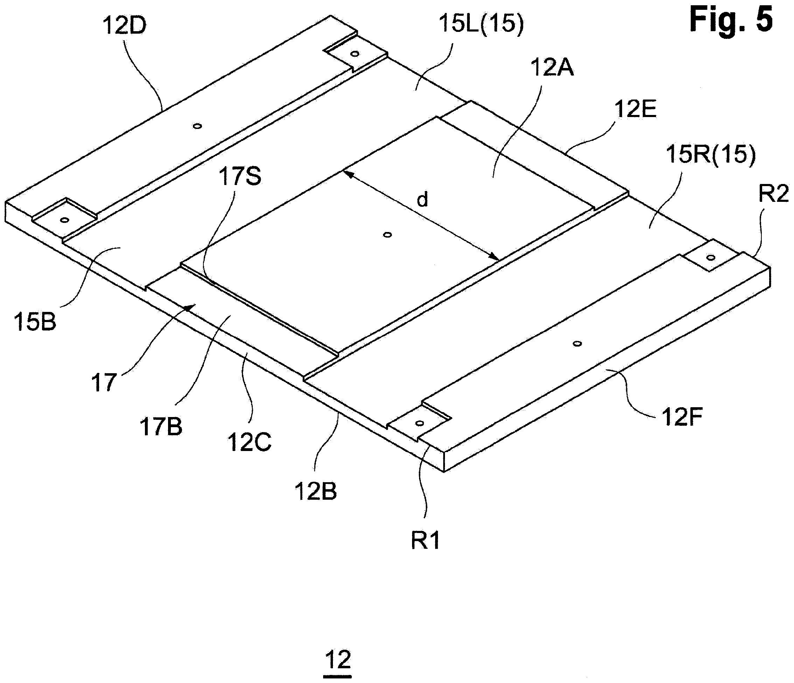

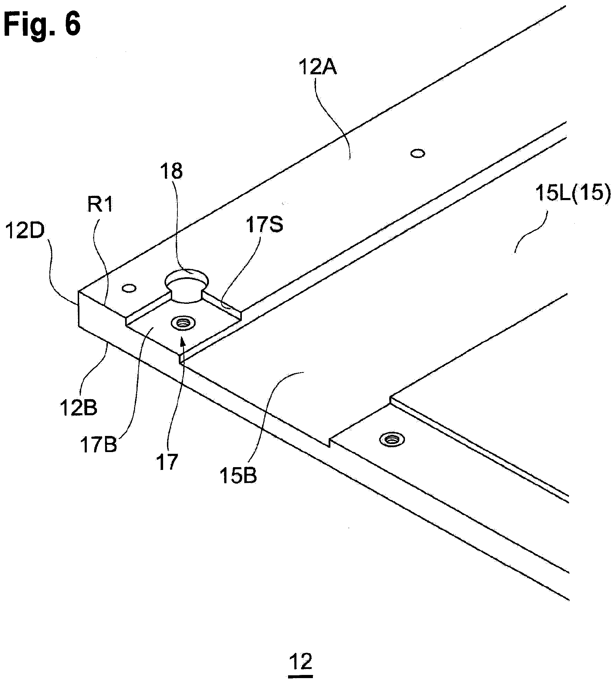

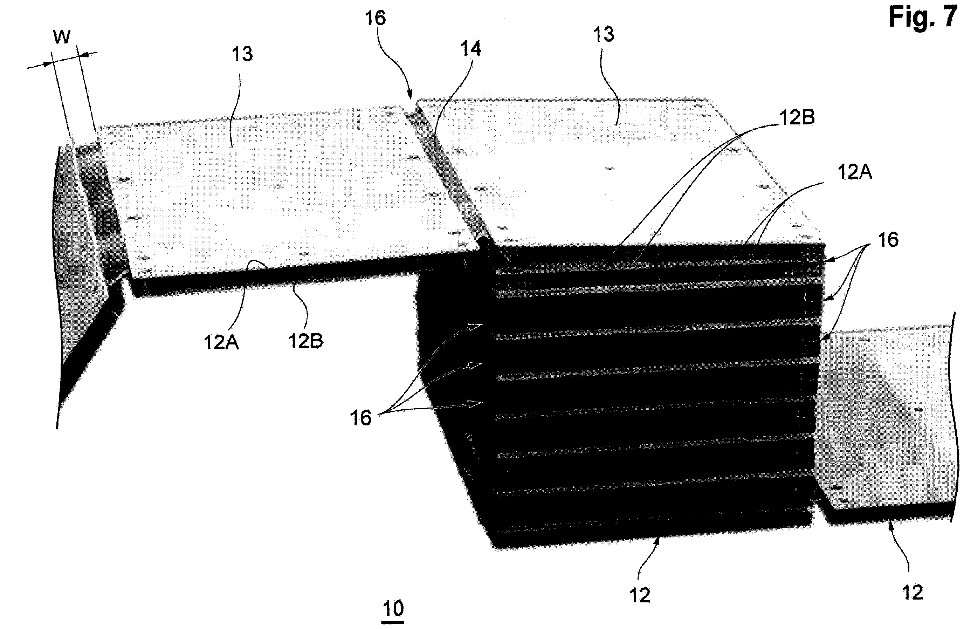

It is easy to carry the two-parallel-line unit because the two parallel lines 11 are foldable (refer to FIG. 7). A flexible layout can be constructed with respect to the two-parallel-line unit 10 (refer to FIG. 3). Since the guide plates 12 are provided (refer to FIG. 5), a distance D between conductors 11L and 11R (refer to FIG. 1) is unlikely to vary even if the two parallel lines 11 are folded. Accordingly, a contactless power supply system (refer to FIG. 2) has high power reception efficiency. Furthermore, the two-parallel-line unit 10 can be easily assembled by fixing an insulating cover 14 to a cover seat 17 (refer to FIG. 6). Hereinafter, each configuration will be described in detail with reference to FIGS. 1 to 7.

FIG. 1 is a schematic diagram showing an example of a contactless power supply system 1 according to an embodiment of the present invention and FIG. 2 is a circuit diagram showing an example of the contactless power supply system 1 according to an embodiment of the present invention. As shown in FIGS. 1 and 2, the contactless power supply system (wireless power supply system) 1 includes a power transmission device 2 on a power transmission side and a power reception device 3 on a power reception side. The power transmission device 2 includes a power supply device 4 which generates high-frequency power, and a two-parallel-line unit 10 which supplies the high-frequency power generated in the power supply device 4 to the power reception device 3.

The power supply device 4 includes, for example, a DC power supply device, an inverter circuit and an impedance matching device, converts supplied commercial power into DC power through the DC power supply device and then converts the DC power into predetermined high-frequency power through the inverter circuit and the impedance matching device and outputs the high-frequency power to the two-parallel-line unit 10. Note that the configuration of the power supply device 4 is not particularly limited and various devices can be used as long as the devices output predetermined high-frequency power to the two-parallel-line unit 10.

The power reception device 3 is an automated guided vehicle or an electric car, for example, and includes a coil 5 magnetically coupled to the two-parallel-line unit 10, and a load 6 such as a power storage device electrically connected to the coil 5. The power reception device 3 may further include a rectifying/smoothing circuit or the like which converts high-frequency power supplied to the coil 5 into DC power. The power reception device 3 may be configured such that the load 6 such as a motor is directly driven by the DC power supplied from the rectifying/smoothing circuit and the power storage device may be omitted.

FIG. 3 is a perspective view showing an example of the power transmission device 2 according to an embodiment of the present invention. As shown in FIG. 3, the power transmission device 2 includes the two-parallel-line unit 10 laid along a driving route of the power reception device 3 which is a movable body. The power transmission device 2 may further include a capacitor unit 20 which reduces the impedance of the two-parallel-line unit 10. In the illustrated example, a plurality of two-parallel-line units 10 are connected through the capacitor unit 20. Further, another capacitor unit 20 is connected to the two-parallel-line unit 10 at the end of the power transmission device 2.

As the length of the two-parallel-line unit 10 increases, the inductance of the two-parallel-line unit 10 increases and consequently the impedance thereof increases. If the impedance of the two-parallel-line unit 10 increases and impedance matching with the power reception device 3 is not achieved, this may cause power loss of the contactless power supply system 1. When the capacitor unit 20 is serially connected to the two-parallel-line unit 10 to form a serial resonance circuit, an impedance due to an inductance increase occurred in the two-parallel-line unit 10 and an impedance caused by the capacitor unit 20 are canceled out and thus power loss of the contactless power supply system 1 is minimized. Among known techniques pertaining to such a serial resonance circuit is, for example, Patent Publication JP-A-2014-236409 (DAIHEN Corporation).

FIG. 4 is a plan view of the two-parallel-line unit of FIG. 3, in which part of the unit is illustrated in an exploded manner. As shown in FIG. 4, the two-parallel-line unit 10 includes two parallel lines 11 composed of a pair of foldable conductors 11L and 11R, a plurality of guide plates 12 attached to the two parallel lines 11, a protection cover 13 which covers each of the guide plates 12, and an insulating cover 14 which covers a gap between the guide plates 12 neighboring each other.

In the illustrated example, each of the conductors 11L and 11R is composed of a flat braided wire. Further, one conductor 11L may include a plurality of flat braided wires. Likewise, the other conductor 11R may include a plurality of flat braided wires. For the purpose of insulation and waterproofing, each flat braided wire may be covered with a cylindrical cover or a plurality of flat braided wires may be bundled and covered with a cylindrical cover. Note that the foldable conductors 11L and 11R are not limited to a flat braided wire and may be one in which a plurality of litz wires obtained by twisting an enamel wire are arranged, or the like. Various electric wires can be used as the conductors 11L and 11R as long as they are flexible and foldable electric wires.

If the conductors 11L and 11R are copper tubes, the conductors 11L and 11R are bulky and difficult to handle because then it is not possible to wind or fold them to reduce the size thereof. Alternatively, if the two parallel lines 11 are rubber-coated electric wires with a large wire diameter, it is difficult to bury the two parallel lines 11 because they are thick. In contrast, the conductors 11L and 11R are foldable in the present embodiment and thus a flexible layout can be constructed. A pair of conductors 11L and 11R may be short-circuited (refer to FIG. 1), insulated from each other or connected to the capacitor unit 20 (refer to FIG. 3) at the end of the power transmission device 2.

The plurality of guide plates 12 are attached to the two parallel lines 11 and control a distance D between the pair of the conductors 11L and 11R. In a gap between the guide plates 12 neighboring each other, a bending part 16 which makes the two parallel lines 11 foldable is provided in the two-parallel-line unit 10.

In the bending part 16, the conductors 11L and 11R are positioned outside the guide plate 12 and are not superposed on a first face 12A of the guide plate 12. In other words, the bending part 16 is a part that is not supported by the guide plate 12 in the conductors 11L and 11R. In the illustrated example, the bending part 16 is covered with the insulating cover 14. The insulating cover 14 is formed of a material having flexibility, such as silicone rubber, in a strip form.

The two parallel lines 11 accommodated in a cavity 15 may be sealed up with a filling material such as a potting resin or cement or may be protected by the protection cover 13. In the illustrated example, the protection cover 13 formed in a rectangular flat plate shape covers the entire first face 12A of the guide plate 12.

FIG. 5 is a perspective view showing the guide plate 12 shown in FIG. 4. As shown in FIG. 5, each guide plate 12 is formed in an approximately rectangular flat plate shape including the first face 12A, a second face 12B opposite to the first face 12A, and edge faces 12C, 12D, 12E and 12F which connect the first and second faces 12A and 12B. The edge faces 12D and 12F are perpendicular to the first and second faces 12A and 12B, for example, and are formed parallel to the extending direction of the two parallel lines 11. The edge faces 12C and 12E are formed to be perpendicular to the first and second faces 12A and 12B and the edge faces 12D and 12F, for example.

The cavity 15 which accommodates the two parallel lines 11 is formed in the first face 12A. In the illustrated example, the cavity 15 is formed as two recessed lines (grooves) 15L and 15R which respectively accommodate the pair of the parallel conductors 11L and 11R constituting the two parallel lines 11. The distance D between the pair of the conductors 11L and 11R is controlled in a state in which the conductors 11L and 11R are accommodated in the cavity 15 by the recessed lines 15L and 15R extending parallel to each other having a distance d therebetween. Note that the shape of the cavity 15 is not limited to the illustrated example. For example, a wide cavity 15 including the recessed lines 15L and 15R may be formed and a protrusion or the like for controlling movement of the conductors 11L and 11R may be provided in the cavity 15.

A cover seat 17 recessed from the first face 12A is formed on the first face 12A of the guide plate 12 along the bending part 16. At least a part of a ridge line R1 at which the first face 12A intersects the edge face 12C is removed by the cover seat 17 on one side of the guide plate 12. Likewise, at least a part of a ridge line R2 at which the first face 12A intersects the edge face 12E is removed by the cover seat 17 on the other side opposite to the one side. The bottom face 17B of the cover seat 17 is formed parallel to the first face 12A. A depth from the first face 12A to the bottom face 17B of the cover seat 17 is less than a depth from the first face 12A to the bottom face 15B of the cavity 15.

In a state in which the insulating cover 14 is fixed to the cover seat 17, the width W of the bending part is determined according to a difference between the widths of the insulating cover 14 and the cover seat 17. If an overlap width of the insulating cover 14 and the cover seat 17 is adjusted, the width W of the bending part 16 can be made equal to a predetermined width. That is, it is possible to control the width W of the bending part 16 using the insulating cover 14.

In the illustrated example, the cover seat 17 has an abutting surface 17S which positions the flange of the insulating cover 14. When the flange of the insulating cover 14 is brought into contact with the abutting surface 17S, a female screw provided in the insulating cover 14 can be easily aligned with a female screw formed and provided in the cover seat 17. It is also possible to adjust the width of the bending part 16 by adjusting the width of the insulating cover 14 and to adjust the width W of the bending part 16 by adjusting a width from the ridge lines R1 and R2 to the abutting surface 17S.

FIG. 6 is a perspective view showing a modified example of the guide plate 12. As shown in FIG. 6, it is possible to bury a female screw fitting instead of directly forming a female screw on a resin plate constituting the guide plate 12. As shown in FIG. 6, a clearance hole 18 may be formed at a corner of the cover seat 17. For example, the clearance hole 18 may be formed to be superposed on the four corners of the cover seat 17 and formed at a level approximately the same as the cover seat 17 or deeper than the cover seat 17.

If the four corners of the cover seat 17 are round, the four corners of the insulating cover 14 are likely to be unable to reliably come into contact with the abutting surface 17S of the cover seat 17 when the four corners of the insulating cover 14 are acute-angled. When the clearance hole 18 is formed, the flange of the insulating cover 14 can reliably come into contact with the abutting surface 17S of the cover seat 17 even if the four corners of the insulating cover 14 are acute-angled because the four corners of the insulating cover 14 do not interfere with the four corners of the cover seat 17. In addition, if the clearance hole 18 is provided, the insulating cover 14 is easily separated when the two-parallel-line unit 10 is assembled and disassembled.

FIG. 7 is a diagram showing an example of the two-parallel-line unit 10 folded into a bellows form. As shown in FIG. 7, it is possible to stack the plurality of guide plates 12 by folding the two parallel lines 11 at the bending part 16 in a bellows form, that is, such that the first faces 12A (protection covers 13) face each other and the second faces 12B face each other. When the width W of the bending part 16 is narrow, the insulating cover 14 become stiff and thus is likely to be unable to bring the second faces 12B into close contact with each other. The width W of the bending part 16 is adjusted to at least twice the thickness from the bottom face 17B of the cover seat 17 (refer to FIG. 6) to the second face 12B.

The two-parallel-line unit 10 and the power transmission device 2 configured as above include the foldable two parallel lines 11 and thus a flexible layout can be constructed as shown in FIG. 3. Since the two-parallel-line unit 10 can be folded and carried in a compact form as shown in FIG. 7, relocation is also easy. Such two parallel lines 11 can be configured using, for example, a flat braided copper wire which is inexpensive and easily available.

The distance D between the conductors 11L and 11R is unlikely to vary because the plurality of guide plates 12 are attached to the two parallel lines 11 as shown in FIG. 4. A two-parallel-line unit with high power reception efficiency can be provided. Since the cavity 15 which accommodates the two parallel lines 11 is formed in each guide plate 12, the number of components can be reduced as compared to a case of securing a space by inserting a spacer between two guide plates 12, 12. The first face 12A side of the guide plate 12 is covered with the protection cover 13 and thus provides an excellent appearance.

The bending part 16 is protected by the insulating cover 14 and, even if it is touched by chance, an electric shock does not occur. The guide plates 12 can be stacked such that the width W of the bending part 16 is made equal to a predetermined width and the second faces 12B closely come into contact with each other, as shown in FIG. 7, by adjusting a width in which the insulating cover 14 and the cover seat 17 overlap. It is possible to easily align the position of the insulating cover 14 with the position of the cover seat 17 by providing the abutting surface 17S or the clearance hole 18 in the cover seat 17, as shown in FIG. 6.

The above-described embodiment is for the purpose of facilitating understanding of the present invention and does not restrict interpretation of the present invention. Each element included in the embodiments, the disposition, material, condition, shape, size and the like of each element are not limited to the illustrated ones and can be appropriately However, the scope of protection is solely defined by the appended claims.

- 1: Contactless power supply system
- 2: Power transmission device
- 3: Power reception device
- 4: Power supply device
- 5: Coil
- 6: Load
- 10: Two-parallel-line unit
- 11: Two parallel lines
- 11L, 11R: Conductors
- 12: Guide plate
- 13: Protection cover
- 14: Insulating cover
- 15: Cavity
- 15B: Bottom face
- 15L, 15R: Recessed lines
- 16: Bending part
- 17: Cover seat
- 17B: Bottom face
- 17S: Abutting surface
- 18: Clearance hole
- 20: Capacitor unit
- D: Distance between conductors
- D: Distance between recessed lines
- W: Width of bending part

## Claims

1. A two-parallel-line unit (10) configured to supply power from a power supply device (4) to a power reception side (3) in a contactless manner, the two-parallel-line unit (10) comprising:
two parallel lines (11) composed of a pair of foldable conductors (11L, 11R); and
a plurality of guide plates (12) which fix a distance (D) between the pair of the conductors (11L, 11R), each of the guide plates (12) having a first face (12A) and a second face (12B) opposite to the first face (12A),
**characterized in that** each of the guide plates (12) is formed in an approximately rectangular flat plate shape, wherein a foldable bending part (16) is provided between the guide plates (12) neighboring each other, and the plurality of guide plates (12) are stackable by being folded such that the first faces (12A) face each other and the second faces (12B) face each other.

2. The two-parallel-line unit (10) according to claim 1, wherein a cavity (15) which accommodates the two parallel lines (11) is formed in each of the guide plates (12).

3. The two-parallel-line unit (10) according to claim 1 or 2, further comprising an insulating cover (14) configured to cover
the bending part (16), wherein
the first face (12A) has a cover seat (17) formed along the bending part (16), and
the insulating cover (14) is configured to control a width (W) of the bending part (16) in a state in which the insulating cover (14) is fixed to the cover seat (17).

4. The two-parallel-line unit (10) according to any one of claims 1 to 3, wherein each of the conductors (11L, 11R) is composed of a flat braided copper wire.

5. A power transmission device (2), comprising:
the two-parallel-line unit (10) according to any one of claims 1 to 4; and
a capacitor unit (20) configured to reduce impedance of the two-parallel-line unit (10).

## Patentansprüche

1. Einheit (10) mit zwei parallelen Leitungen, die so konfiguriert ist, dass sie Energie von einer Energieversorgungsvorrichtung (4) zu einer Energieempfangsseite (3) auf kontaktlose Weise liefert, wobei die Einheit (10) mit zwei parallelen Leitungen umfasst:
zwei parallele Leitungen (11), die aus einem Paar von faltbaren Leitern (11L, 11R) bestehen; und
mehrere Führungsplatten (12), die einen Abstand (D) zwischen dem Paar der Leiter (11L, 11R) festlegen, wobei jede der Führungsplatten (12) eine erste Fläche (12A) und eine zweite Fläche (12B) entgegengesetzt zu der ersten Fläche (12A) aufweist,
**dadurch gekennzeichnet, dass** jede der Führungsplatten (12) in einer annähernd rechteckigen flachen Plattenform ausgebildet ist, wobei ein faltbares Biegeteil (16) zwischen den einander benachbarten Führungsplatten (12) bereitgestellt ist, und die mehreren Führungsplatten (12) stapelbar sind, indem sie so gefaltet werden, dass die ersten Flächen (12A) einander zugewandt sind und die zweiten Flächen (12B) einander zugewandt sind.

2. Einheit (10) mit zwei parallelen Leitungen nach Anspruch 1, wobei in jeder der Führungsplatten (12) ein Hohlraum (15) ausgebildet ist, der die beiden parallelen Leitungen (11) aufnimmt.

3. Einheit (10) mit zwei parallelen Leitungen nach Anspruch 1 oder 2, die ferner eine isolierende Abdeckung (14) umfasst, die so konfiguriert ist, dass sie das Biegeteil (16) abdeckt,
wobei
die erste Fläche (12A) einen Abdeckungssitz (17) aufweist, der entlang des Biegeteils (16) ausgebildet ist, und
die isolierende Abdeckung (14) so konfiguriert ist, dass sie eine Breite (W) des Biegeteils (16) in einem Zustand steuert, in dem die isolierende Abdeckung (14) an dem Abdeckungssitz (17) befestigt ist.

4. Einheit (10) mit zwei parallelen Leitungen nach einem der Ansprüche 1 bis 3, wobei jeder der Leiter (11L, 11R) aus einem flachen, geflochtenen Kupferdraht besteht.

5. Energieübertragungsvorrichtung (2), die umfasst:
die Einheit (10) mit zwei parallelen Leitungen nach einem der Ansprüche 1 bis 4; und
eine Kondensatoreinheit (20), die so konfiguriert ist, dass sie eine Impedanz der Einheit (10) mit zwei parallelen Leitungen reduziert.

## Revendications

1. Unité à deux lignes parallèles (10) configurée pour fournir de l'énergie, sans contact, à partir d'un dispositif de fourniture d'énergie (4) à un côté de réception d'énergie (3), l'unité à deux lignes parallèles (10) comprenant :
deux lignes parallèles (11) composées d'une paire de conducteurs pliables (11L, 11R) ; et
une pluralité de plaques de guidage (12) qui fixent une distance (D) entre la paire de conducteurs (11L, 11R), chacune des plaques de guidage (12) ayant une première face (12A) et une seconde face (12B) opposée à la première face (12A),
**caractérisée en ce que** chacune des plaques de guidage (12) est réalisée sous la forme d'une plaque plate approximativement rectangulaire, une partie de flexion pliable (16) étant prévue entre les plaques de guidage (12) adjacentes les unes aux autres et la pluralité de plaques de guidage (12) étant empilables en étant pliées de telle sorte que les premières faces (12A) se fassent face et les secondes faces (12B) se fassent face.

2. Unité à deux lignes parallèles (10) selon la revendication 1, dans laquelle une cavité (15) qui reçoit les deux lignes parallèles (11) est formée dans chacune des plaques de guidage (12).

3. Unité à deux lignes parallèles (10) selon la revendication 1 ou 2, comprenant en outre un couvercle isolant (14) configuré pour couvrir la partie de flexion (16),
dans laquelle
la première face (12A) présente un siège de couvercle (17) formé le long de la partie de flexion (16) et
le couvercle isolant (14) est configuré pour commander une largeur (W) de la partie de flexion (16) dans un état dans lequel le couvercle isolant (14) est fixé au siège de couvercle (17).

4. Unité à deux lignes parallèles (10) selon l'une quelconque des revendications 1 à 3, dans laquelle chacun des conducteurs (11L, 11R) est composé d'un fil de cuivre tressé plat.

5. Dispositif de transmission d'énergie (2), comprenant :
l'unité à deux lignes parallèles (10) selon l'une quelconque des revendications 1 à 4 ; et
une unité de condensateur (20) configurée pour réduire l'impédance de l'unité à deux lignes parallèles (10).
